## Europäisches Patentamt

## European Patent Office

## Office européen des brevets

(19)

(11) Veröffentlichungsnummer : **0 076 467**
**B1**

(12)

# EUROPÄISCHE PATENTSCHRIFT

(45) Veröffentlichungstag der Patentschrift :
30.12.86

(51) Int. Cl.⁴ : **C 04 B 37/00**, C 04 B 35/56

(21) Anmeldenummer : 82109035.4

(22) Anmeldetag : 30.09.82

(54) Verfahren zur Herstellung von Formkörpern auf SIC-Basis durch Verbinden vorgefertigter Teilkörper.

(30) Priorität : 02.10.81 DE 3139270

(43) Veröffentlichungstag der Anmeldung :
13.04.83 Patentblatt 83/15

(45) Bekanntmachung des Hinweises auf die Patenterteilung : 30.12.86 Patentblatt 86/52

(84) Benannte Vertragsstaaten :
AT BE CH DE FR GB IT LI NL SE

(56) Entgegenhaltungen :
DE-A- 3 003 186

(73) Patentinhaber : Kernforschungsanlage Jülich Gesellschaft mit beschränkter Haftung
Postfach 1913
D-5170 Jülich 1 (DE)

(72) Erfinder : Gupta, Ashok Kumar
Artilleriestrasse 49
D-5170 Jülich (DE)
Erfinder : Gyarmati, Ernö, Dr.
Kopernikusstrasse 4
D-5170 Jülich (DE)
Erfinder : Kreutz, Hermann
Försterweg 3b
D-4050 Mönchengladbach (DE)
Erfinder : Münzer, Rudolf
Tilsiterstrasse 7
D-5110 Alsdorf (DE)
Erfinder : Naoumidis, Aristides, Dr.
Kreisbahnstrasse 30
D-5170 Jülich (DE)

## Beschreibung

Die Erfindung bezieht sich auf ein Verfahren zur Herstellung von Formkörpern auf SiC-Basis durch Verbinden von vorgefertigten zusammengepaßten Teilkörpern mit Verbindungsgrenzflächen aus SiSiC oder SiC, wobei zumindest eine von zwei aneinanderzufügenden Flächen aus SiSiC besteht, durch Aufheizen der kittfrei aneinandergefügten feinpolierten Grenzflächen der Teilkörper in einer inerten Atmosphäre mit einem Druck zwischen $10^{-3}$ Torr ($1{,}33 \cdot 10^{-6}$ bar) und 1 at (0,98 bar).

Ein solches Verfahren ist aus der DE-A-3 003 186 bekannt, nach der Siliciumcarbid-Teilkörper durch Diffusionsschweißen bei $\leqslant 1\,300$ °C unter Preßdrucken von z. B. 400 kg/cm² (39,2 MPa) miteinander verbunden werden.

In einer älteren deutschen Patentanmeldung mit dem amtlichen Aktenzeichen P 30 37 199.4-45 (DE-A-3 037 199, veröffentlicht am 8.4.82) wird von der Anmelderin ein Verfahren zur Herstellung von Formkörpern aus Siliciumcarbid oder Formkörpern aus Graphit oder graphitähnlichem Werkstoff mit Siliciumcarbid-Oberfläche durch Verbinden vorgefertigter Teilkörper aus Graphit oder graphitähnlichem Werkstoff beschrieben, bei dem die aneinandergefügten Teilkörper durch Infiltration von Silicium unter Bildung einer Siliciumcarbidverbindungsschicht vereinigt werden.

Aus der DE-B-17 96 279 ist ferner ein Verfahren zur Herstellung von aus Kohlenstoff bestehenden mit Siliciumcarbid überzogenen Körpern bekannt, bei dem ebenso gegebenenfalls von Teilkörpern aus Kohlenstoff ausgegangen wird, die mit einem plastischen Gemisch aus einem filmbildenden organischen Polymerisat in einer Menge von 5 bis 50 Teilen als Bindemittel, 100 Teilen fein verteiltem Siliciumcarbid (jeweils mit Korngrößen unter 50 μm) überzogen, zusammengefügt und in Gegenwart von — bezogen auf den im Gemisch enthaltenen Kohlenstoff — überschüssigem geschmolzenen Silicium kurzzeitig auf 1 650 °C bis 2 200 °C erhitzt werden.

In analoger Weise sollen gemäß der US-A-2 319 323 Siliciumcarbid-Teilkörper oder Siliciumcarbid- und Kohle-Teilkörper vermittels eines Kohlenstoffkitts aus feinteiliger Kohle und Bindemittel, wie Kasein, miteinander verbunden werden, indem die Trennfuge in Gegenwart von Siliciumpulver auf etwa 1 800 °C aufgeheizt wird, wodurch Silicium in die Trennfuge (Verbindungsfläche) einfiltriert und zu Siliciumcarbid umgesetzt wird, das zusammen mit überschüssigem Silicium nach dem Abkühlen zu einer festen Verbindung der Teikörper führen soll.

Es wurde nun festgestellt, daß es zur Herstellung von SiC-Körpern aus Teilkörpern nicht erforderlich ist, nur von Kohlenstoff-Teilkörpern oder von mit Kohlenstoff-Kitt aneinandergefügten Siliciumcarbid- oder Kohlenstoff-Teilkörpern auszugehen, diese einer Siliciumfiltration vermittels einer Siliciumschmelze, schmelzendem Siliciumgranulat oder einer siliciumhaltigen Atmosphäre zu unterwerfen, sondern daß erstaunlicherweise auch gut aneinandergepaßte Körper aus Siliciumcarbid oder mit Siliciumcarbidoberfläche unterschiedlicher Herkunft ohne Kittzusatz und ohne Siliciuminfiltration miteinander verbunden werden können, wenn in der Verbindungsfläche bewegliches Silicium in Form von SiSiC vorhanden ist, das zum Schmelzen gebracht wird.

Das erfindungsgemäße Verfahren der eingangs genannten Art zur Herstellung von Formkörpern aus Teilkörpern mit zumindest einer SiSiC-Verbindungsfläche ist daher dadurch gekennzeichnet, daß man die Grenzflächen 15 bis 100 Minuten lang auf eine Temperatur zwischen 1 500 und 1 800 °C, insbesondere von etwa 1 600 °C aufheizt.

Bei diesem Verfahren enthält zumindest einer der zu verbindenden Teilkörper (bzw. seine Grenzfläche) selbst überschüssiges Silicium, das beim Aufheizen schmilzt und vermutlich aufgrund seiner Löseeigenschaft für SiC ein verfilzendes Kristallwachstum über die Grenzflächen hinweg ermöglicht, so daß eine ausreichende Vereinigung der Teilkörper erzielt wird.

Die Bezeichnung SiSiC-Körper ist im Fachbereich bekannt und bezeichnet überschüssiges Silicium enthaltende SiC-Körper. Solche SiSiC-Körper (bzw. entsprechende Grenzflächen) können bekanntermaßen unmittelbar durch Silicierung eines Kohlekörpers oder kohlenstoffhaltigen Körpers (bzw. solcher Grenzflächen) erhalten werden.

Vorzugsweise werden im Rahmen der vorliegenden Erfindung schmelzsilicierte Körper bzw. Körper mit solchen Grenzflächen verwendet. Der Siliciumüberschuß kann dabei insbesondere bei etwa 10 % liegen und mindestens bis in eine Tiefe von etwa 10 μm reichen.

Die Verbindungsflächen müssen feinpoliert sein, wie sie etwa durch Schleifen und Polieren mit Diamantpaste (Endkörnung ca. 1 μm) erhalten werden können.

Die Aufheizung erfolgt in sauerstoff-freier Inertatmosphäre bei den genannten Drucken, und vorzugsweise bei einem Unterdruck von $10^{-2}$ Torr ($1{,}33 \cdot 10^{-5}$ bar). Die feinpolierten Flächen werden während der Heizbehandlung vorzugsweise aneinandergepresst, wobei selbstverständlich die Güte der Politur und die Größe der Berührungsfläche von großer Bedeutung für die Erzielung eines die Grenzfläche übergreifenden Wachstums von SiC-Kristalliten sind. Vorzugsweise wird die Verbindungsfläche daher mit zumindest 0,1 kg/cm² (9,8 kPa) belastet und insbesondere werden Pressdrucke von 1 bis 10 kg/cm² (0,098-0,98 MPa), insbesondere von 5 kg/cm² (0,49 MPa) angewandt.

Die nachfolgende Beschreibung dient zur Erläuterung der Erfindung anhand eines Beispiels unter Bezugnahme auf die angefügte Zeichnung. Diese zeigt schematisch den Aufbau einer z. B.

zur Verbindung von Rohrstücken geeigneten Apparatur.

Diese umfaßt einen doppelwandigen evakuierbaren Behälter 1 mit einem zylindrischen Heizelement 2 und einer Auflagefläche 3 für Proben 4, die mit einem Gewicht 5 aus Molybdän oder Wolfram unter Zwischenschaltung von Graphit oder Kohlenstofffilz 6 belastet werden können. 7 und 8 sind Anschlüsse zum Spülen mit Inertgas bzw. zum Evakuieren, während bei 9 und 10 isoliert durchgeführte Zuleitungen für das Heizelement angedeutet sind.

1) In einer solchen Vorrichtung wurden zwei durch Tauchsilicierung von entsprechenden silicierbaren Kohlekörpern erhaltene SiSiC-Rohrstücke mit einer Wandstärke von 5 mm mit einer Dichte von 3,00 g/cm³ stirnseitig miteinander verbunden.

Zu diesem Zweck wurden die Endflächen der mit einer Trennscheibe zurechtgeschnittenen Stücke auf einer Diamantschleifscheibe mit einer Körnung von 90 μm 15 Minuten lang mit 500 Upm geschliffen. Anschließend wurde mit 250 Upm mit Diamantpaste mit einer Körnung von 45 μm bzw. 15 μm je 15 Minuten lang und schließlich je 10 Minuten lang mit einer Körnung von 3 μm bzw. 1 μm fein poliert.

Die polierten Stirnflächen wurden in sauerstofffreier Atmosphäre unter einem verminderten Druck von 10⁻² Torr 1,33 · 10⁻⁵ bar 30 Minuten lang auf 1 600 °C gehalten und dabei mit einem Preßdruck von 1 kg/cm² (0,098 MPa) belastet. Metallografische Schliffe der abgekühlten Proben zeigten einen durchgehenden Verband mit die Grenzflächen übergreifenden SiC-Kriställchen. Die Biegefestigkeit der erhaltenen Proben lag bei 300 MPa.

2) Zwei je 1 cm² große Flächen aus SiSiC bzw. heißgepreßtem SiC wurden wie unter 1) angegeben poliert und dann in sauerstoff-freier Atmosphäre unter einem Druck von 10⁻² Torr 1,33 · 10⁻⁵ bar 60 Minuten lang auf 1 800 °C aufgeheizt, wobei die Verbindungsflächen mit einem Druck von 1 kg/cm² (0,098 MPa) belastet wurden. Die metallografische Untersuchung der abgekühlten Probe zeigte einen einwandfreien Verbund der Teilstücke und die Biegefestigkeit des erhaltenen Produkts betrug an der Schweißnaht 250 MPa.

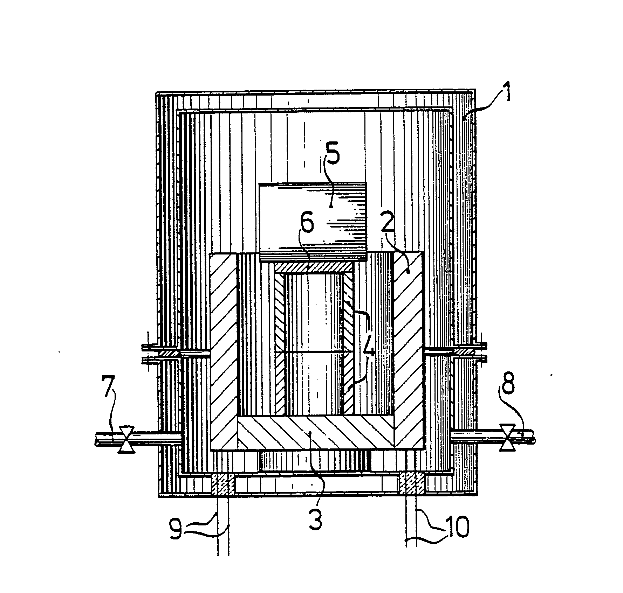

## Patentansprüche

1. Verfahren zur Herstellung von Formkörpern auf SiC-Basis durch Verbinden von vorgefertigten zusammengepaßten Teilkörpern mit Verbindungsgrenzflächen aus SiSiC oder SiC, wobei zumindest eine von zwei aneinanderzufügenden Flächen aus SiSiC besteht, durch Aufheizen der kittfrei aneinandergefügten feinpolierten Grenzflächen der Teilkörper in einer inerten Atmosphäre mit einem Druck zwischen 10⁻³ Torr (1,33 · 10⁻⁶ bar) und 1 at (0,98 bar), dadurch gekennzeichnet, daß man die Grenzflächen 15 bis 100 Minuten lang auf eine Temperatur zwischen 1 500 und 1 800 °C, insbesondere von etwa 1 600 °C aufheizt.

2. Verfahren nach Anspruch 1, dadurch gekennzeichnet, daß die Verbindungsflächen mit einem Preßdruck von zumindest 0,1 kg/cm² (9,8 kPa) belastet werden.

3. Verfahren nach Anspruch 2, dadurch gekennzeichnet, daß die Verbindungsflächen mit einem Preßdruck von 1-10 kg/cm² (0,098-0,98 MPa), insbesondere von 5 kg/cm² (0,49 MPa) belastet werden.

## Claims

1. Method of producing silicon carbide-based bodies by joining prefabricated fitted-together parts having connecting boundary surfaces of SiSiC or SiC, at least one of two surfaces to be joined to one another being made of SiSiC, by heating the fine-polished boundary surfaces of the parts which are put together without cement in an inert atmosphere with a pressure between 10⁻³ Torr (1.33 · 10⁻⁶ bar) and 1 at (0.98 bar), characterised in that the boundary surfaces are heated for 15 to 100 minutes to a temperature between 1 500 and 1 800 °C, especially approximately 1 600 °C.

2. Method according to claim 1, characterised in that the connecting surfaces are loaded with an application pressure of at least 0.1 kg/cm² (9.8 kPa).

3. Method according to claim 2, characterised in that the connecting surfaces are loaded with an application pressure of 1-10 kg/cm² (0.098-0.98 MPa), especially 5 kg/cm² (0.49 MPa).

## Revendications

1. Procédé de fabrication de corps à base de carbure de silicium par liaison de pièces préfabriquées qui s'adaptent et qui ont des surfaces limites de liaison en SiSiC ou en SiC, l'une au moins de deux surfaces aboutées étant en SiSiC, par chauffage des surfaces limites aboutées, finement polies et exemptes de ciment des pièces dans une atmosphère inerte, sous une pression comprise entre 10⁻³ torr (1,33 · 10⁻⁶ bar) et 1 atmosphère (0,98 bar), caractérisé en ce qu'il consiste à porter les surfaces limites pendant 15 à 100 minutes à une température comprise entre 1 500 et 1 800 °C, et notamment de 1 600 °C environ.

2. Procédé suivant la revendication 1, caractérisé en ce qu'il consiste à soumettre les surfaces de liaison à une pression d'application d'au moins 0,1 kg/cm² (9,8 kPa).

3. Procédé suivant la revendication 2, caractérisé en ce qu'il consiste à soumettre les surfaces de liaison à une pression d'application de 1 à 10 kg/cm² (0,098 à 0,98 MPa), notamment de 5 kg/cm² (0,49 MPa).